(19) Europäisches Patentamt
European Patent Office
Office européen des brevets

(11) Numéro de publication: **0 104 967**
**B1**

(12) **FASCICULE DE BREVET EUROPEEN**

(45) Date de publication du fascicule du brevet: **16.10.85**

(51) Int. Cl.[4]: **C 07 F 9/50**

(21) Numéro de dépôt: **83401661.0**

(22) Date de dépôt: **16.08.83**

(54) **Procédé de préparation de triarylphosphines sulfonées.**

(30) Priorité: **31.08.82 FR 8214862**

(43) Date de publication de la demande: **04.04.84 Bulletin 84/14**

(45) Mention de la délivrance du brevet: **16.10.85 Bulletin 85/42**

(84) Etats contractants désignés: **BE DE FR GB IT NL**

(56) Documents cités:
**FR - A - 2 349 562**
**GB - A - 1 066 261**
**US - A - 3 549 729**

(73) Titulaire: **RHONE-POULENC CHIMIE DE BASE, 25, quai Paul Doumer, F-92408 Courbevoie (FR)**

(72) Inventeur: **Sabot, Jean-Louis, 1 Quater avenue Lesage, F-78600 Maisons Laffitte (FR)**

(74) Mandataire: **Varnière-Grange, Monique et al, RHONE-POULENC RECHERCHES Service Brevets Chimie et Polymères Centre de Recherches de Saint-Fons 85, avenue des Frères Perret B.P. 62, F-69192 St-Fons Cédex (FR)**

**EP 0 104 967 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention concerne un procédé de préparation de triarylphosphines sulfonées.

Les triarylphosphines sulfonées sont notamment utilisées comme ligands hydrosolubles permettant de former des complexes avec des métaux de transition, par exemple le rhodium, dans l'eau et ces solutions peuvent être employées comme catalyseur par exemple pour la synthèse de composés aldéhydiques par hydroformylation d'oléfines. Compte tenu de cette utilisation, il est nécessaire que les triarylphosphines présentent une excellente pureté.

On connaît différents procédés de préparation des triarylphosphines sulfonées. En particulier, on peut les préparer par réaction de sulfonation des noyaux aromatiques à l'aide d'un mélange $SO_3 - H_2SO_4$ en grand excès. On arrête ensuite la réaction de sulfonation par dilution du milieu réactionnel avec de l'eau. On obtient ainsi un hydrolysat riche en acide sulfurique et comprenant la triarylphosphine sulfonée sous forme acide.

Pour isoler ce dernier composé sous forme de sel neutre, on neutralise l'hydrolysat par exemple à la soude de façon à éliminer par cristallisations successives les anions sulfates sous forme de sulfate de sodium en milieu aqueux, puis on cristallise la triarylphosphine sulfonée sous forme de son sel de sodium par addition de méthanol puis évaporation du solvant.

Une telle méthode présente des inconvénients. Tout d'abord la neutralisation s'effectue avec une oxydation partielle de la phosphine en oxyde de phosphine et cet oxyde est gênant en ce sens qu'il augmente ainsi les quantités de diluant inerte lors de la réaction d'hydroformylation. En outre la quantité de soude nécessaire à la neutralisation est importante compte tenu de la richesse de l'hydrolysat en $H_2SO_4$. Par conséquent la quantité d'impuretés apportées par la soude est grande. Or, ces impuretés qui se retrouvent ensuite dans le produit final peuvent être très gênantes pour la catalyse. Parmi ces impuretés, les chlorures augmentent en outre les risques de corrosion de l'appareillage lors de la réaction ultérieure de synthèse de l'aldéhyde. Par ailleurs, la présence de chlorate de sodium favorise l'oxydation de la triarylphosphine. Le sulfate de sodium résiduel de la neutralisation est en outre gênant pour la catalyse.

L'objet de l'invention est un procédé de préparation d'une triarylphosphine sulfonée de grande pureté.

Le procédé selon l'invention permet la préparation de triarylphosphines sulfonées ou de leurs sels de formule:

*(Formule en tête de la colonne suivante)*

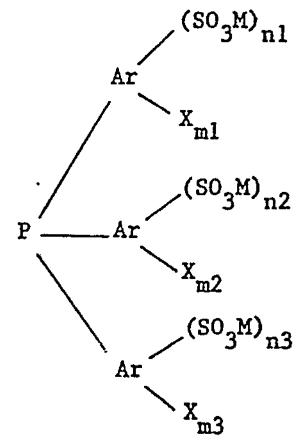

(1)

dans laquelle les groupes Ar sont des groupes aryle identiques ou différents; les groupes X sont identiques ou différents et sont choisis parmi les groupes alkyle ou alcoxy linéaires ou ramifiés contenant 1 à 4 atomes de carbone, les atomes d'halogènes, les groupes hydroxy, nitrile, nitro, amino et amino substitués par des groupes alkyles linéaires ou ramifiés contenant 1 à 4 atomes de carbone;

M étant $H^+$ ou un reste cationique d'origine minérale ou organique choisi, de manière que le composé de formule (1) soit soluble dans l'eau, dans le groupe constitué par des cations minéraux dérivés de métaux alcalins ou alcalino-terreux ou dérivés de métaux pris dans le groupe formé par le plomb, le zinc, le cuivre; des ions ammonium ou ammonium quaternaire;

$m_1$, $m_2$, $m_3$ sont des nombres entiers, identiques ou différents, allant de 0 à 5;

$n_1$, $n_2$, $n_3$ sont des nombres entiers, identiques ou différents allant de 0 à 3, l'un au moins des nombres $n_1$, $n_2$, $n_3$ étant supérieur ou égal à 1;

ce procédé est du type comprenant une sulfonation des noyaux aromatiques de la triarylphosphine correspondante à l'aide d'un mélange $H_2SO_4 - SO_3$ puis hydrolyse pour arrêter la réaction au stade de sulfonation désiré ce par quoi on obtient un hydrolysat riche en acide sulfurique et comprenant la triarylphosphine sulfonée;

et ce procédé est caractérisé en ce qu'en vue d'isoler la triarylphosphine sulfonée dudit hydrolysat, dans un premier temps, on met cet hydrolysat en contact avec une phase organique comprenant au moins un extractant choisi dans le groupe comprenant les esters phosphorique ou diphosphorique, phosphonique ou diphosphonique, phosphinique ou diphosphinique, les oxydes de phosphine ou les dioxydes de diphosphines, les alcools peu miscibles ou non miscibles à l'eau en $C_4$-$C_{12}$ et les sulfoxydes, puis on sépare un raffinat aqueux et on recueille une phase organique contenant la triarylphosphine sulfonée; puis dans un deuxième temps on sépare la triarylphosphine sulfonée de la phase organique au moyen d'une régénération par de l'eau dans le cas où M est $H^+$ ou par une solution aqueuse comprenant l'élément M dans les autres cas et on recueille à titre de produit final une solution aqueuse de triarylphosphine sulfonée ou de son sel.

Le procédé de l'invention permet donc d'effectuer préalablement à la neutralisation la séparation de la triarylphosphine sulfonée et de l'acide sulfurique. Par conséquent la quantité de base à introduire est considérablement diminuée et donc aussi la quantité d'impuretés qu'elle apporte.

Le procédé de l'invention présente donc l'avantage d'obtenir un produit d'une plus grande pureté, ou bien, pour une pureté donnée, de pouvoir utiliser une base de moins bonne qualité et par conséquent meilleur marché.

D'autres caractéristiques et détails de l'invention apparaîtront plus clairement à la lecture de la description qui va suivre et du dessin annexé représentant schématiquement un procédé d'extraction liquide-liquide selon un mode particulier de réalisation de l'invention.

Parmi les phosphines de formule (1) préparées par le procédé de l'invention on peut citer notamment celles dans lesquelles:

– les groupes Ar sont des groupes phényle;

– X représente un radical alkyle tel que méthyle et éthyle; un radical alkoxy tel que méthoxy et éthoxy; un atome de chlore;

– les restes cationiques M représentent des cations minéraux dérivés de métaux tels que le sodium, le potassium, le calcium, le baryum; des ions ammonium $NH_4^+$; des ions ammonium quaternaire tels que les ions tétraméthylammonium; tétrapropylammonium, tétrabutylammonium;

– $m_1$, $m_2$, $m_3$ sont des nombres entiers, identiques ou différents allant de 0 à 3.

Plus particulièrement on peut noter celles de formule (1) pour lesquelles les groupes Ar sont des groupes phényle; $m_1$, $m_2$ et $m_3$ sont égaux à 0 et $n_1$, $n_2$ et $n_3$ ont une valeur égale à 0 ou 1, la somme $n_1 + n_2 + n_3$ étant comprise entre 1 et 3.

Dans ce dernier groupe, on citera en particulier la triphénylphosphine trisulfonée (TPPTS) ($n_1 = n_2 = n_3 = 1$) les groupements $SO_3$ M étant en méta, M étant $Na^+$ ou $H^+$.

A titre d'exemple non limitatif de composés de formule (1) qui peuvent être préparés selon la présente invention on citera: les sels alcalins ou alcalino-terreux, les sels d'ammonium, les sels d'ammonium quaternaire des (m-sulfophényl)diphénylphosphine; (p-sulfophényl)diphénylphosphine; (m-sulfo, p-méthylphényl)di(p-méthylphényl)-phosphine; (m-sulfo, p-méthoxyphényl)di(p-méthoxyphényl)phosphine; (m-sulfo, p-chlorophényl)di(p-chlorophényl)phosphine; di(m-sulfo-phényl)phénylphosphine; di(p-sulfophényl)phénylphosphine; di(m-sulfo, p-méthylphényl)(p-méthylphényl)phosphine; di(m-sulfo, p-méthoxyphényl)(p-méthoxyphényl)-phosphine; di(m-sulfo, p-chlorophényl)(p-chlorophényl)-phosphine; tri(p-sulfophényl)phosphine; tri(m-sulfo, p-méthylphényl)phosphine; tri(m-sulfo, p-méthoxyphényl)phosphine; tri(m-sulfo, p-chlorophényl)phosphine; (o-sulfo, p-méthylphényl)-(m-sulfo, p-méthylphényl)(m, m'-disulfo, p-méthylphényl)phosphine; (m-sulfophényl)(m-sulfo, p-chlorophényl)(m, m'-disulfo, p-chlorophényl)phosphine.

L'extractant utilisé dans le procédé peut être choisi dans le groupe des esters phosphorique ou diphosphorique, phosphonique ou diphosphonique, phosphinique ou diphosphinique et des oxydes de phosphines ou des dioxydes de diphosphines, c'est-à-dire des produits de formule:

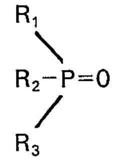

(2)

dans laquelle $R_1$, $R_2$, $R_3$ sont identiques ou différents et peuvent être soit par exemple des radicaux alkyle à chaîne linéaire ou ramifiée, alcényle, alcynyle, alcoxy-alkyle, aryle, alkyl-aryle, ces radicaux pouvant être substitués par des halogènes, l'un ou deux ou l'ensemble des groupes $R_1$, $R_2$, $R_3$ pouvant être reliés à l'atome de phosphore par un atome d'oxygène, deux groupements parmi $R_1$, $R_2$, $R_3$ pouvant être liés entre eux et former un cycle; ou encore des produits de formule:

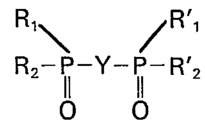

(3)

Y étant un groupement alkylène linéaire ou ramifié de préférence comportant 1 à 12 atomes de carbone et $R'_1$, $R'_2$, étant définis de la même manière que $R_1$, $R_2$.

Notamment, on pourra utiliser comme extractant les alkylphosphates tels que par exemple le tributylphosphate (TBP), le triisobutylphosphate, le trioctylphosphate.

On citera aussi par exemple parmi les extractants du type phosphonate le dibutyl butyl phosphonate (DBBP), le di-éthyl-2 hexyl (éthyl-2 hexyl) phosphonate (DEHEHP), le bis (chloroéthyl) vinyl phosphonate; le diisobutyl butyl phosphonate; le dipentyl pentyl phosphonate; le dipentyl isopentyl phosphonate; le diisopentyl isopentyl phosphonate; le dihexyl hexyl phosphonate; le dipentyl phenyl phosphonate; le tétra-éthyl décylène diphosphonate; le tétra-éthyl butylène diphosphonate; le tétra-isopropyl méthyl méthylène diphosphonate.

Les extractants peuvent être aussi du type phosphinate tel que par exemple, le méthyldioctyl phosphinate (MDOP), le pentyl dipentyl phosphinate, l'hexyl dihexylphosphinate.

On peut aussi mentionner des extractants tels que le 1-oxo-1 octyloxy phosphole, 1-oxo-1-(2-éthylhexyloxy)-phosphole, 1-oxo-1-dodécyloxy phosphole.

On pourra aussi utiliser les oxydes de phosphine comme par exemple les oxydes de di-n-hexyl méthoxyoctylphosphine (DHMOPO) de tri-n-butylphosphine (TBPO), de trioctylphosphine (TOPO), de tri(éthyl-2 hexyl)phosphine.

L'extractant peut aussi être choisi dans le groupe des alcools en $C_4$-$C_{12}$ et plus particulièrement parmi les alcools en $C_8$-$C_{10}$. Ce peut être, par exemple, l'octanol, le n-décanol, l'isodécanol, l'éthyl-2-hexanol.

Enfin, l'extractant peut être choisi parmi les sulfoxydes, par exemple le diheptylsulfoxyde ou le n-décyl-méthyl sulfoxyde.

Il serait bien entendu possible d'utiliser au lieu d'un seul extractant, un mélange de ceux-ci. De

plus, il peut être avantageux dans certains cas de mettre en œuvre une phase organique qui comprend au moins un extractant du type précité en solution dans un diluant inerte par exemple un hydrocarbure aliphatique.

Les différentes étapes du procédé vont maintenant être décrites plus en détail.

La sulfonation de la phosphine de départ et l'obtention de l'hydrolysat se font d'une manière connue en soi et l'invention ne concerne pas ces étapes.

On rappelle cependant que la sulfonation peut se faire à l'aide d'un oléum à 20% en poids d'anhydride sulfurique par exemple, à une température qui peut être comprise entre 20° C et 40° C environ. Cette sulfonation se fait en présence d'un grand excès d'$H_2SO_4$.

Quand on désire arrêter la sulfonation, on coule de l'eau dans le mélange et on hydrolyse ainsi le $SO_3$ en excès.

L'hydrolysat ainsi obtenu est donc très riche en $H_2SO_4$ il peut présenter par exemple une concentration en $H_2SO_4$ de l'ordre de 35 N.

Par ailleurs, il faut noter que cet hydrolysat contient une faible quantité d'oxyde de triarylphosphine sulfonée.

Selon l'invention, dans une première étape, l'hydrolysat est alors mis en contact avec une phase organique comprenant un extractant du type décrit plus haut.

Il peut être nécessaire de diluer l'hydrolysat pour cette mise en contact. Dans ce cas, cette dilution sera faite jusqu'à un stade tel qu'on obtienne d'une part une bonne séparation des phases et d'autre part une séparation significative de la triarylphosphine sulfonée et de l'acide sulfurique.

A titre d'exemple, lors de l'emploi du TBP en général et aussi en particulier dans le cas de la préparation de la triphénylphosphine trisulfonée TPPTS avec cet extractant, on dilue l'hydrolysat jusqu'à une concentration en acide sulfurique qui avantageusement peut être comprise entre environ 3 N et environ 10 N, notamment environ 4 N et environ 9 N et de préférence entre environ 7 N et environ 8 N.

La mise en contact entre l'hydrolysat et la phase organique se fait d'une manière connue en soi notamment en continu et à contre-courant dans un appareillage d'extraction liquide-liquide à plusieurs étages du type mélangeur-décanteur ou colonne par exemple.

La mise en contact de la phase organique et de l'hydrolysat se fait normalement à température ambiante. La température peut dépendre aussi de la nature de l'extractant utilisé.

De préférence, cette mise en contact se fait sous atmosphère inerte, par exemple sous atmosphère d'azote. Ceci permet d'éviter l'oxydation de la triarylphosphine sulfonée en oxyde de phosphine correspondant et donc de maintenir ou d'augmenter le rendement de récupération.

Après la mise en contact on obtient et on sépare une phase organique qui contient la triarylphosphine sulfonée et une petite quantité d'acide sulfurique co-extrait, et une phase aqueuse ou raffinat qui contient de l'acide sulfurique. Par ailleurs, on a pu constater que la majeure partie de l'oxyde de triarylphosphine sulfoné présent dans l'hydrolysat n'est pas extraite par l'extractant organique et reste dans la phase aqueuse. Ce résultat est particulièrement avantageux car il permet d'obtenir en fin de procédé une solution de triarylphosphine sulfonée ayant une très faible teneur en oxyde de triarylphosphine.

La seconde étape du procédé de l'invention consiste à séparer la triarylphosphine sulfonée de la phase organique.

Cette séparation se fait par mise en contact de la phase organique avec de l'eau dans le cas où M est $H^+$ ou avec une solution aqueuse comprenant l'élément M précité dans les autres cas.

Dans ce dernier cas ce sera, par exemple une solution de soude ou de potasse notamment en quantité stœchiométrique par rapport à la triarylphosphine sulfonée et à l'acide co-extrait. Dans ce même cas, la phosphine est neutralisée et transformée en sel de l'élément M et ce sel repasse dans la solution aqueuse.

Comme pour l'extraction, cette régénération peut se faire en continu et à contre-courant avec un appareillage identique. On recueille ainsi à l'issue de cette étape une phase organique purifiée et une phase aqueuse comprenant la triarylphosphine sulfonée sous forme acide ou sous forme d'un sel et qui constitue la production. Cette solution peut être utilisée directement pour la synthèse de l'aldéhyde.

Il est possible d'utiliser comme solution aqueuse de régénération des solutions basiques de normalité élevée par exemple jusqu'à 6 N ou 10 N ce qui facilite la décantation et permet l'obtention de solutions de triarylphosphine sulfonée à teneur élevée par exemple jusqu'à 600 g de sel par litre.

A titre d'exemple on peut citer la préparation du sel de sodium de la TPPTS par régénération avec une solution de soude de concentration comprise entre environ 1 N et environ 10 N.

On notera que la phase aqueuse constituant la production peut comporter une certaine quantité d'extractant, de l'ordre de quelques pour-cent. Pour éliminer cet extractant, il est possible de traiter cette phase aqueuse avec un solvant organique inerte, non miscible à l'eau choisi parmi les hydrocarbures saturés ou aromatiques du type isooctane, toluène, kérosène.

Afin de diminuer la teneur en acide sulfurique de la phase organique introduite à l'étape de régénération, il est avantageux de laver cette phase organique par mise en contact de celle-ci avec de l'eau ou une solution aqueuse d'un acide fort ou d'un de ses sels.

Ce lavage peut se faire d'une manière connue en soi, notamment en continu et à contre-courant dans un appareillage d'extraction liquide-liquide à plusieurs étages. La phase aqueuse résultant du lavage est envoyée à l'extraction.

Selon un mode de réalisation particulier de l'invention, on peut utiliser comme phase aqueuse de lavage une partie de la solution de triarylphosphine

sulfonée constituant la production obtenue après l'étape de régénération.

*Exemple 1*

Cet exemple décrit un procédé de préparation de l'hydrolysat. Dans un erlen de 500 ml on charge 200 g d'acide sulfurique de la marque Rhône-Poulenc Normapur (95% minimum). On refroidit à +6° C avec un bain d'eau et de glace et sous agitation. On charge lentement 100 g de triphénylphosphine Fluka purum (98% minimum) (TPP). Quand on a solubilisé la moitié de la TPP on laisse remonter la température dans l'acide sulfurique pour finir la dissolution.

Dans un ballon placé dans un bain thermostaté, on charge 1 l d'acide sulfurique de Nordhausen de la marque Prolabo (20% $SO_3$ en poids) (1860 g) et sous agitation on refroidit à +6° C environ en mettant de la glace dans le bain thermostaté. Quand on a atteint cette température on coule la solution de TPP – acide sulfurique lentement en 45 min environ. On règle la température du bain à 26° C et on laisse 90 h avec une agitation lente sous léger courant d'argon.

On refroidit le bain thermostaté avec de la glace pour avoir environ +6° C dans le ballon et on coule 90 g d'eau distillée en 1 h environ.

On obtient un hydrolysat contenant 2022 g d'acide sulfurique 100% (89,83%), 37 g d'eau (1,65%) et 192 g de triphénylphosphine sulfonée.

Les exemples suivants illustrent l'extraction de l'hydrolysat selon l'invention. Ces exemples sont réalisés sous atmosphère inerte, les extractants ayant été préalablement dégazés.

*Exemple 2*

On part de 1 l d'hydrolysat du mélange réactionnel obtenu de la manière décrite dans l'exemple 1 et qui contient 1712 g de $H_2SO_4$ et 116 g de triphénylphosphine sulfonée (TPPS). Ce litre d'hydrolysat est dilué par 4 l d'eau.

La solution est mise en contact avec 1 l de TBP et après séparation le raffinat est mis de nouveau en contact avec 1 l de TBP. Le raffinat de la deuxième extraction contient 1,9 g de TPPS c'est-à-dire que le rendement d'extraction est supérieur à 98%.

Les deux fractions d'extrait sont réunies puis régénérées par 250 $cm^3$ de soude 10 N et l'on recueille une solution contenant 130 g de sel de sodium de la TPPS et 129 g de sulfate de sodium.

*Exemple 3*

On part du même hydrolysat que dans l'exemple 2 et on procède de la même façon mais avec 1 l de n-octanol. Le raffinat de la deuxième extraction contient 5 g de TPPS, le rendement d'extraction est de 95%.

Les deux fractions d'extraits sont réunies puis régénérées par 250 $cm^3$ de soude 10 N et on recueille une solution contenant 125 g de sel de sodium de la TPPS et 250 g de sulfate de sodium.

*Exemple 4*

Cet exemple illustre la mise en œuvre de l'invention dans un procédé en continu et il est donné en référence à la figure annexée.

Dans une batterie d'extraction (1) comportant 6 étages, on envoie dans le troisième étage un courant (2) d'hydrolysat dilué présentant des teneurs en TPPS et $H_2SO_4$ de 30 g/l et 350 g/l respectivement. Ce courant (2) a un débit de 500 $cm^3$/h.

On alimente aussi la batterie à contre-courant avec un courant (3) de TBP d'un débit de 100 $cm^3$/h et avec un courant d'eau (4) d'un débit de 20 $cm^3$/h, ce dernier assurant la réextraction de l'acide sulfurique co-extrait par le TBP avec la TPPS.

De la batterie (1) sort un courant (5) qui constitue le raffinat et présentant des teneurs en TPPS et $H_2SO_4$ de 0,06 g/l et 335 g/l respectivement.

De la batterie (1) sort un courant (6) de TBP chargé de TPPS qui passe ensuite dans une batterie (7) de régénération alimentée par ailleurs et à contre-courant par une solution (8) de soude 1,05 N avec un débit de 85 $cm^3$/h.

De cette batterie (7) ressort un courant (9) avec un débit de 102 $cm^3$/h d'une solution de sel de sodium de TPPS qui constitue la production. Cette solution présente une teneur en TPPS $Na_3$ de 160 g/l et des rapports $Na_2SO_4$/TPPS $Na_3$ de 100 ppm, Cl-/TPPS $Na_3$ inférieur à 50 ppm.

Il serait tout à fait possible dans le cadre de ce mode de réalisation de dériver une partie du courant (9), cette dérivation constituant alors le courant d'alimentation (4) de la batterie (1).

*Exemple 5*

On utilise une installation du même type que celle de l'exemple 2.

Dans une batterie d'extraction comportant 4 étages, on envoie dans le deuxième étage un courant d'hydrolysat dilué présentant une teneur en $H_2SO_4$ de 350 g/l et une teneur en triphénylphosphine sulfonée (TPPS) de 5,37 $10^{-2}$M/l. Cette triphénylphosphine sulfonée est présente sous la forme de triphénylphosphine trisulfonée TPPTS, de triphénylphosphine disulfonée TPPDS et d'oxyde de triphénylphosphine sulfonée OTPPS dans les pourcentages respectifs suivants: 72,9%; 17,1%; 10% (pourcentage déterminé par RMN). Ce courant a un débit de 500 $cm^3$/h.

On alimente aussi la batterie à contre-courant avec un courant de TBP d'un débit de 110 $cm^3$/h et avec un courant d'eau d'un débit de 20 $cm^3$/h.

De la batterie sort un courant aqueux qui constitue le raffinat et présentant des teneurs en TPPS et $H_2SO_4$ de $10^{-3}$mol/l et 335 g/l respectivement.

De la batterie sort aussi un courant de TBP chargé de TPPS qui passe ensuite dans une batterie de régénération alimentée par ailleurs et à contre-courant par une solution de soude 5,9 N avec un débit de 15 $cm^3$/h.

De cette batterie ressort un courant d'une solution aqueuse de sel de sodium de TPPS qui constitue la production. Cette solution a la composition suivante TPPS: 0,85 mol/l sous la forme de

TPPTS, TPPDS, et d'oxydes de triphénylphosphine di et tri sulfonées dans les pourcentages respectifs suivants: 75,8%; 20,1%; 1,4%; 0,6%. La phase aqueuse contient aussi 2,1% de TBP.

Le TBP pourra être éliminé par un lavage avec un solvant comme décrit précédemment.

On remarque grâce à cet exemple que le procédé de l'invention permet une élimination efficace des oxydes de triphénylphosphines, ce qui contribue à augmenter encore la pureté du produit final obtenu.

*Exemple 6*

On part de l'hydrolysat dilué de l'exemple 2.

On réalise quatre essais successifs en mettant en contact 1 l d'hydrolysat avec 1 l de DBBP, 1 l de méthyldioctylphosphinate (MDOP), 1 l d'oxyde de tri-n-octylphosphine (TOPO) dilué à 30% dans le Solvesso d'une coupe de dérivés aromatiques commercialisés sous la marque Solvesso®, 1 l de n-décyl-méthylsulfoxyde (DMSO) dilué à 30% dans le Solvesso. Après séparation des phases on détermine les coefficients de partage respectifs de $H_2SO_4$ et TPPS ($P_{H_2SO_4}$ – $P_{TPPS}$). Ces coefficients sont indiqués dans le tableau 1 ci-dessous.

*Tableau 1*

| Extractant | $P_{H_2SO_4}$ | $P_{TPPS}$ |
|---|---|---|
| DBBP | 0,27 | 50 |
| MDOP | 0,28 | 85 |
| TOPO | 0,10 | 10 |
| DMSO | 0,28 | 10 |

*Exemple 7*

On utilise un hydrolysat du type de celui de l'exemple 2 et on le dilue de manière à faire varier sa concentration en acide sulfurique. On extrait cet hydrolysat par le TBP avec un rapport volumique des phases égal à 1. Les coefficients de partage déterminés après séparation des phases sont indiqués ci-dessous.

*Tableau 2*

| Concentration de l'hydrolysat en $H_2SO_4$ | $P_{TPPS}$ | $P_{H_2SO_4}$ |
|---|---|---|
| 3 N | 6 | 0,04 |
| 4 N | 11 | 0,05 |
| 7 N | 58 | 0,1 |
| 8 N | 63 | 0,12 |
| 9 N | 15 | 0,15 |
| 10 N | 5 | 0,17 |

Bien entendu, l'invention n'est nullement limitée aux modes de réalisation décrits et représentés qui n'ont été donnés qu'à titre d'exemple. En particulier, elle comprend tous les moyens constituant des équivalents techniques des moyens décrits ainsi que leurs combinaisons si celles-ci sont mises en œuvre dans le cadre de la protection comme revendiqué.

## Revendications

1. Procédé de préparation de triarylphosphines sulfonées ou de leurs sels de formule:

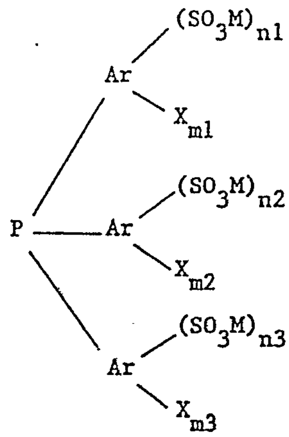

(1)

dans laquelle les groupes Ar sont des groupes aryle identiques ou différents; les groupes X sont identiques ou différents et sont choisis parmi les groupes alkyle ou alcoxy linéaires ou ramifiés contenant 1 à 4 atomes de carbone, les atomes d'halogènes, les groupes hydroxy, nitrile, nitro, amino et amino substitués par des groupes alkyles linéaires ou ramifiés contenant 1 à 4 atomes de carbone;

M étant $H^+$ ou un reste cationique d'origine minérale ou organique choisi, de manière que le composé de formule (1) soit soluble dans l'eau, dans le groupe constitué par des cations minéraux dérivés de métaux alcalins ou alcalino-terreux ou dérivés de métaux pris dans le groupe formé par le plomb, le zinc, le cuivre; des ions ammonium ou ammonium quaternaire;

$m_1$, $m_2$, $m_3$ sont des nombres entiers, identiques ou différents, allant de 0 à 5;

$n_1$, $n_2$, $n_3$ sont des nombres entiers, identiques ou différents allant de 0 à 3, l'un au moins des nombres $n_1$, $n_2$, $n_3$ étant supérieur ou égal à 1;

procédé du type comprenant une sulfonation des noyaux aromatiques de la triarylphosphine correspondante à l'aide d'un mélange $H_2SO_4 - SO_3$ puis hydrolyse pour arrêter la réaction au stade de sulfonation désiré ce par quoi on obtient un hydrolysat riche en acide sulfurique et comprenant la triarylphosphine sulfonée;

procédé caractérisé en ce qu'en vue d'isoler la triarylphosphine sulfonée dudit hydrolysat, dans un premier temps, on met en contact l'hydrolysat avec une phase organique comprenant au moins un extractant et choisi dans le groupe comprenant les esters phosphorique ou diphosphorique, phosphonique ou diphosphonique, phosphinique ou diphosphinique ou les oxydes de phosphine ou les dioxydes de diphosphines, les alcools peu miscibles ou non miscibles à l'eau en $C_4$-$C_{12}$ et les sulfoxydes; puis on sépare un raffinat aqueux et on recueille une phase organique contenant la triarylphosphine sulfonée; puis dans un deuxième temps on sépare la triarylphosphine sulfonée de la phase organique au moyen d'une régénération par de l'eau dans le cas où M est $H^+$ ou par une solution

aqueuse comprenant l'élément M dans les autres cas et on recueille à titre de produit final une solution aqueuse de triarylphosphine sulfonée ou de son sel.

2. Procédé selon la revendication 1, caractérisé en ce qu'on utilise comme extractant un extractant choisi dans le groupe comprenant le tributylphosphate, le dibutyl butyl phosphonate, le méthyldioctylphosphinate, l'oxyde de trioctylphosphine.

3. Procédé selon la revendication 1, caractérisé en ce qu'on utilise comme extractant un alcool en $C_8$-$C_{10}$, notamment l'octanol.

4. Procédé selon la revendication 1, caractérisé en ce qu'on utilise comme extractant le n-décylméthylsulfoxyde.

5. Procédé selon l'une des revendications précédentes, caractérisé en ce que préalablement à la régénération précitée, la phase organique est lavée par mise en contact avec de l'eau ou une solution aqueuse d'un acide fort ou d'un de ses sels.

6. Procédé selon la revendication 5, caractérisé en ce que la solution aqueuse de lavage précitée est constituée par une partie de la solution aqueuse de la triarylphosphine sulfonée obtenue à titre de produit final.

7. Procédé selon l'une quelconque des revendications précédentes, caractérisé en ce que la mise en contact de l'hydrolysat avec la phase organique, la régénération et le lavage précités se font en continu et à contre-courant.

8. Procédé selon l'une quelconque des revendications précédentes, caractérisé en ce qu'on dilue l'hydrolysat avant sa mise en contact avec la phase organique.

9. Procédé selon la revendication 8 caractérisé en ce qu'on utilise comme extractant le tributylphosphate et qu'on dilue l'hydrolysat jusqu'à une concentration en acide sulfurique comprise entre environ 3 N et environ 10 N, notamment environ 4 N et environ 9 N, de préférence entre environ 7 N et environ 8 N.

10. Procédé selon l'une quelconque des revendications précédentes, caractérisé en ce qu'on prépare une triarylphosphine sulfonée de formule (1) dans laquelle Ar est un groupe phényl; $m_1$, $m_2$, $m_3$ sont égaux à 0 et $n_1$, $n_2$ et $n_3$ ont une valeur égale à 0 ou 1, la somme $n_1 + n_2 + n_3$ étant comprise entre 1 et 3.

11. Procédé selon la revendication 10, caractérisé en ce qu'on prépare la triarylphosphine sulfonée de formule (1) dans laquelle $n_1 = n_2 = n_3 = 1$, les groupements $SO_3M$ étant en méta.

12. Procédé selon l'une quelconque des revendications précédentes, caractérisé en ce que la solution aqueuse de régénération est une solution de soude, notamment une solution à une concentration comprise entre environ 1 N et environ 10 N.

13. Procédé selon l'une quelconque des revendications précédentes caractérisé en ce que la solution aqueuse de triarylphosphine sulfonée obtenue après régénération est lavée avec un solvant organique inerte, non miscible à l'eau choisi parmi les hydrocarbures saturés ou aromatiques, du type toluène, isooctane, kérosène.

14. Procédé selon l'une quelconque des revendications précédentes caractérisé en ce que la mise en contact de l'hydrolysat avec la phase organique a lieu sous atmosphère inerte.

**Patentansprüche**

1. Verfahren zur Herstellung von sulfonierten Triarylphosphinen oder ihren Salzen der Formel

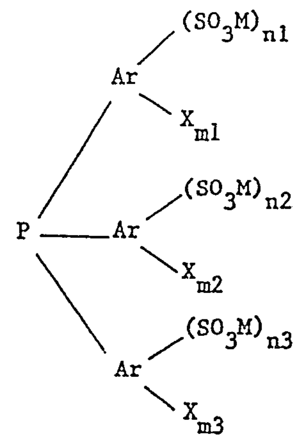

(1)

in der die Gruppen Ar gleiche oder unterschiedliche Arylgruppen sind, die Gruppen X gleich oder verschieden sind und unter den linearen oder verzweigten Alkyl- oder Alkoxygruppen mit 1 bis 4 Kohlenstoffatomen, Halogenatomen, Hydroxy-, Nitril-, Nitro-, Aminogruppen und Aminogruppen substituiert mit linearen oder verzweigten Alkylgruppen mit 1 bis 4 Kohlenstoffatomen ausgewählt werden;

M für $H^+$ oder für einen kationischen Rest anorganischer oder organischer Herkunft steht, der aus der Gruppe bestehend aus anorganischen Kationen, abgeleitet von Alkali- oder Erdalkalimetallen oder von Metallen aus der Gruppe Blei, Zink, Kupfer, oder Ammonium- oder quaternären Ammoniumionen ausgewählt wird, so dass die Verbindung der Formel (1) wasserlöslich ist;

$m_1$, $m_2$ und $m_3$ gleiche oder unterschiedliche ganze Zahlen von 0 bis 5 sind;

$n_1$, $n_2$ und $n_3$ gleiche oder unterschiedliche ganze Zahlen von 0 bis 3 sind, wobei mindestens eine der Zahlen $n_1, n_2, n_3 \geq 1$ ist;

Verfahren, das eine Sulfonierung der aromatischen Kerne des entsprechenden Triarylphosphins mit einem Gemisch $H_2SO_4 - SO_3$ und anschliessende Hydrolyse umfasst, um die Reaktion in dem gewünschten Sulfonierungsstadium anzuhalten, wodurch man ein an Schwefelsäure reiches und das sulfonierte Triarylphosphin umfassendes Hydrolysat erhält, dadurch gekennzeichnet, dass man zur Isolierung des sulfonierten Triarylphosphins von dem Hydrolysat in einem ersten Schritt das Hydrolysat mit einer organischen Phase in Berührung bringt, die zumindest ein Extraktionsmittel umfasst, das ausgewählt ist aus der Gruppe umfassend Phosphorsäure- oder Diphosphorsäureester, Phosphonsäure- oder Diphosphonsäureester, Phosphinsäure- oder Diphosphinsäureester

oder Phosphinoxide oder Diphosphindioxide, mit Wasser nicht oder wenig mischbare $C_4$-$C_{12}$- Alkohole und die Sulfoxide, worauf man ein wässriges Raffinat abtrennt und eine organische Phase gewinnt, die das sulfonierte Triarylphosphin enthält; dass man in einem zweiten Schritt das sulfonierte Triarylphosphin von der organischen Phase durch Regenerierung mit Wasser, wenn $M = H^+$ oder mit einer wässrigen Lösung, enthaltend das Element M in den anderen Fällen, abtrennt und als Endprodukt eine wässrige Lösung des sulfonierten Triarylphosphins oder seines Salzes abzieht.

2. Verfahren nach Anspruch 1, dadurch gekennzeichnet, dass man ein Extraktionsmittel ausgewählt aus der Gruppe Tributylphosphat, Dibutylbutylphosphonat, Methyldioctylphosphinat und Trioctylphosphinoxid verwendet.

3. Verfahren nach Anspruch 1, dadurch gekennzeichnet, dass man als Extraktionsmittel einen $C_8$-$C_{10}$-Alkohol, vor allem Octanol, verwendet.

4. Verfahren nach Anspruch 1, dadurch gekennzeichnet, dass man als Extraktionsmittel n-Decylmethylsulfoxid verwendet.

5. Verfahren nach einem der vorangehenden Ansprüche, dadurch gekennzeichnet, dass vor der genannten Regenerierung die organische Phase durch In-Berührungbringen mit Wasser oder einer wässrigen Lösung einer starken Säure oder eines ihrer Salze gewaschen wird.

6. Verfahren nach Anspruch 5, dadurch gekennzeichnet, dass die genannte wässrige Waschlösung zu einem Teil aus der als Endprodukt erhaltenen wässrigen Lösung des sulfonierten Diarylphosphins besteht.

7. Verfahren nach einem der vorangehenden Ansprüche, dadurch gekennzeichnet, dass das In-Berührungbringen des Hydrolysats mit der organischen Phase, die Regenerierung und das Waschen gleichzeitig und im Gegenstrom erfolgen.

8. Verfahren nach einem der vorangehenden Ansprüche, dadurch gekennzeichnet, dass man das Hydrolysat verdünnt, bevor man es mit der organischen Phase in Berührung bringt.

9. Verfahren nach Anspruch 8, dadurch gekennzeichnet, dass man als Extraktionsmittel Tributylphosphat verwendet und das Hydrolysat bis zu einer Schwefelsäurekonzentration von etwa 3 N bis 10 N, vor allem etwa 4 N bis 9 N und vorzugsweise etwa 7 N bis 8 N verdünnt.

10. Verfahren nach einem der vorangehenden Ansprüche, dadurch gekennzeichnet, dass man ein sulfoniertes Triarylphosphin der Formel (1) herstellt, in der Ar eine Phenylgruppe ist, $m_1$, $m_2$ und $m_3$ 0 bedeuten und $n_1$, $n_2$ und $n_3$ einen Wert von 0 oder 1 haben, wobei die Summe von $n_1 + n_2 + n_3$ 1 bis 3 beträgt.

11. Verfahren nach Anspruch 10, dadurch gekennzeichnet, dass man das sulfonierte Triarylphosphin der Formel (1) herstellt, bei dem $n_1 = n_2 = n_3 = 1$ und die $SO_3M$-Gruppen in m-Stellung stehen.

12. Verfahren nach einem der vorangehenden Ansprüche, dadurch gekennzeichnet, dass die wässrige Regenerierungslösung Natronlauge ist, insbesondere eine etwa 1n bis 10n Natronlauge.

13. Verfahren nach einem der vorangehenden Ansprüche, dadurch gekennzeichnet, dass die nach dem Regenerieren erhaltene wässrige Lösung des sulfonierten Triarylphosphins mit einem inerten organischen Lösungsmittel gewaschen wird, das mit Wasser nicht mischbar ist und ausgewählt wird unter den gesättigten oder aromatischen Kohlenwasserstoffen vom Typ Toluol, Isooctan und Kerosin.

14. Verfahren nach einem der vorangehenden Ansprüche, dadurch gekennzeichnet, dass das Hydrolysat mit der organischen Phase unter inerter Atmosphäre in Berührung gebracht wird.

## Claims

1. A process for the preparation of sulphonated triarylphosphines or salts thereof, of the following formula:

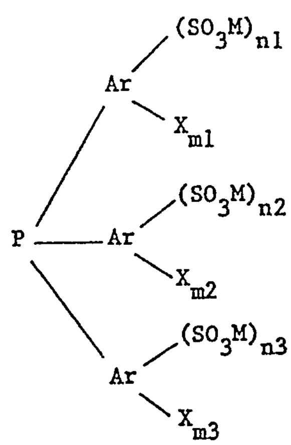

(1)

in which the groups Ar are identical or different aryl groups; the groups X are identical or different and are selected from straight-chain or branched alkyl or alkoxy groups containing from 1 to 4 carbon atoms, halogen atoms, and the groups hydroxy, nitrile, nitro, amino and amino substituted by straight-chain or branched alkyl groups containing from 1 to 4 carbon atoms;

M being $H^+$ or a selected cationic residue of organic or inorganic origin, such that the compound of formula (1) is soluble in water, in the group formed by inorganic cations derived from alkali or alkaline earth metals or derived from metals from the group formed by lead, zinc and copper; ammonium or quaternary ammonium ions;

$m_1$, $m_2$, $m_3$ are integers which are the same or different, ranging from 0 to 5;

$n_1$, $n_2$, $n_3$ are integers which are the same or different, ranging from 0 to 3, one at least of the numbers $n_1$, $n_2$ and $n_3$ being greater than or equal to 1;

being a process of the type comprising sulphonation of the aromatic rings of the corresponding triarylphosphine by means of a $H_2SO_4 - SO_3$ mixture, then hydrolysis to stop the reaction at the desired stage of sulphonation, thereby producing

a sulphuric acid-rich hydrolysate comprising the sulphonated triarylphosphine;

characterized in that, in order to isolate the sulphonated triarylphosphine from said hydrolysate, in a first step, said hydrolysate is brought into contact with an organic phase comprising at least one extracting agent selected from the group of phosphoric or diphosphoric, phosphonic or diphosphonic, phosphinic or diphosphinic esters, phosphine oxides or diphosphine dioxides, slightly water miscible or immiscible $C_4$-$C_{12}$ alcohols and sulfoxides, then an aqueous raffinate is separated and an organic phase containing the sulphonated triarylphosphine is collected; then, in a second step, the sulphonated triarylphosphine is separated from the organic phase by means of a regeneration operation using water when M is $H^+$ or using an aqueous solution containing the element M in the other cases, and an aqueous solution of sulphonated triarylphosphine or salt thereof is collected as the final product.

2. A process according to claim 1 characterized in that the extracting agent used is an extracting agent selected from the group comprising tributylphosphate, dibutyl butyl phosphonate, methyldioctylphosphinate, and trioctylphosphine oxide.

3. A process according to claim 1, characterized in that the extracting agent used is a $C_8$-$C_{10}$ alcohol in particular octanol.

4. A process according to claim 1, characterized in that the extracting agent used is n-decylmethylsulfoxide.

5. A process according to any one of the preceding claims characterized in that, prior to said regeneration operation, the organic phase is washed by being brought into contact with water or an aqueous solution of a strong acid or one of the salts thereof.

6. A process according to claim 5 characterized in that said aqueous washing solution is formed by a part of the aqueous solution of the sulphonated triarylphosphine produced as the final product.

7. A process according to any one of the preceding claims characterized in that the operation of bringing the hydrolysate into contact with the organic phase, the regeneration operation and the washing operation are effected continously and in a counter-flow mode.

8. A process according to any one of the preceding claims characterized in that the hydrolysate is diluted before it is brought into contact with the organic phase.

9. A process according to claim 8 characterized in that the extracting agent used is tributylphosphate and that the hydrolysate is diluted to a level of sulphuric acid concentration of between about 3 N and about 10 N, in particular between about 4 N and about 9 N and preferably between about 7 N and about 8 N.

10. A process according to any one of the preceding claims characterized by preparing a sulphonated triarylphosphine of formula (1) in which Ar is a phenyl group; $m_1$, $m_2$, and $m_3$ are 0 and $n_1$, $n_2$ and $n_3$ are 0 or 1, the total $n_1 + n_2 + n_3$ being between 1 and 3.

11. A process according to claim 10 characterized by preparing a sulphonated triarylphosphine of the formula (1) in which $n_1 = n_2 = n_3 = 1$, the $SO_3M$ groups being in the meta position.

12. A process according to any one of the preceding claims characterized in that the aqueous regeneration solution is a solution of sodium hydroxide, in particular a solution at a level of concentration of between about 1 N and about 10 N.

13. A process according to any one of the preceding claims characterized in that the aqueous solution of sulphonated triarylphosphine obtained after regeneration is washed with a water-immiscible inert organic solvent selected from saturated or aromatic hydrocarbons of the toluene, isooctane or kerosine type.

14. A process according to any one of the preceding claims characterized in that the contacting operation of the hydrolysate with the organic phase is carried out in inert atmosphere.

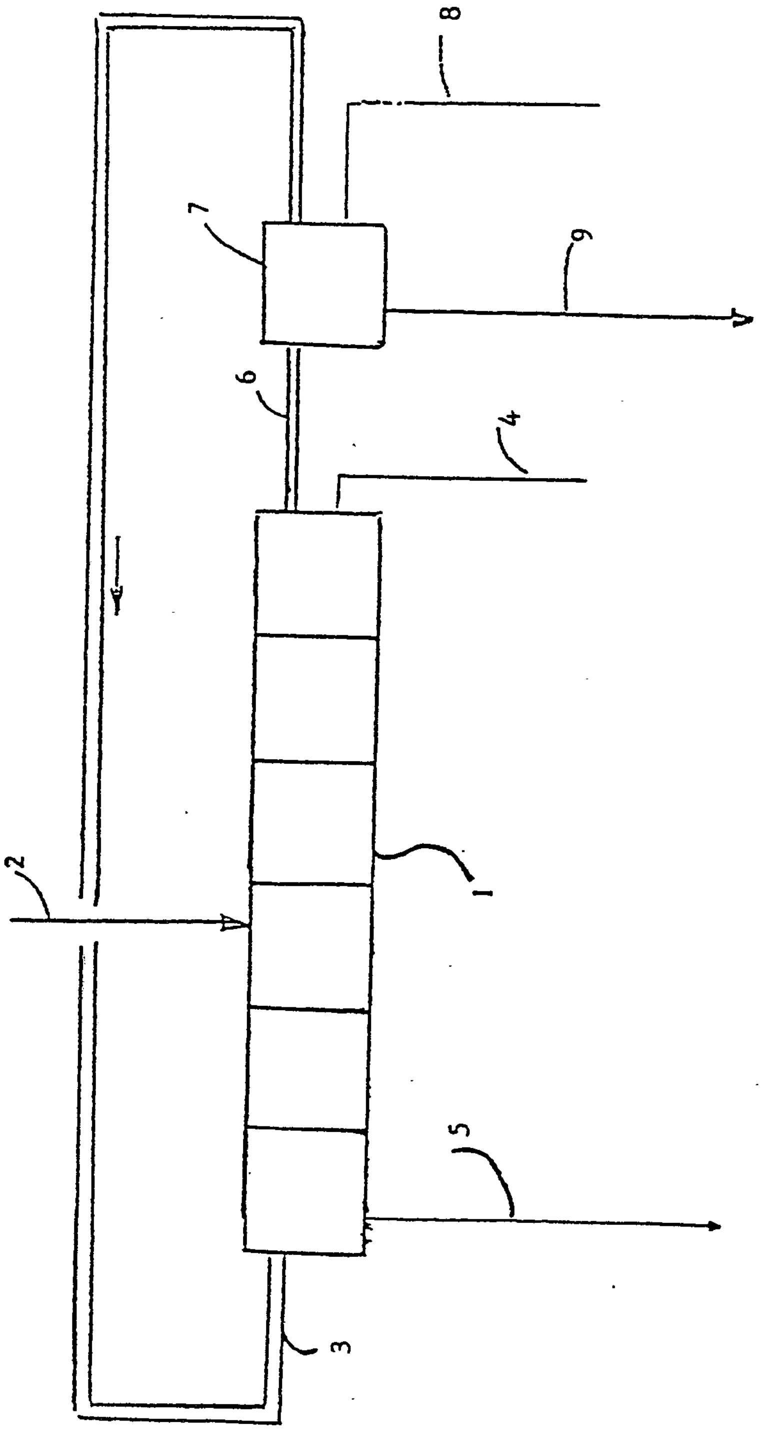
8
7
9
6
4
2
1
5
3